# EUROPEAN PATENT APPLICATION

(11) **EP 2 256 064 A1**
(43) Date of publication of application: **01.12.2010**
(21) Application number: 09161186.3
(22) Date of filing: 27.05.2009
(51) Int. Cl.: B65D 85/04, B65H 49/08

(54) **Container for welding wire with elongated members for maintaining the wire coil**

(71) Applicant: ISAF S.p.A., 38089 Storo (IT)
(72) Inventor: Benedetti, Gianluca, 37066 Sommacampagna ( Verona ) (IT)
(74) Representative: Pittis, Olivier

(57) **Abstract**

A container for packaging a coil of welding wire formed of a unique hollow body (1) and comprising an axially mobile retainer (6) arranged on the top of the welding wire coil (4). The wire further comprises several axially-oriented elongated guiding-members (5) positioned inside the hollow body (1) between the peripheral wall (2) and the wire coil (4), said elongated guiding-members (5) being spaced one from the other of a given spacing distance (D3). The peripheral contour of the retainer (6) comprises several portions in recess (8) that are facing the elongated guiding-members (5), several projecting expansions (7) being oriented radially towards the inner wall (2) of the body (1) and projecting between said elongated guiding-members (5), and said several projecting expansions (7) comprising each, at least one end portion (9) facing the inner wall (2) of the body (1), having a given matching length L3 and configured for matching the surface of the inner wall (2) only along said matching length L3, where the spacing distance (D3) and the matching length (L3) are chosen such that : L3 < 0.8 x D3.

## Description

The present invention relates to a container, i.e., a drum, for packaging, storing, transporting and unwinding a coil or spool of welding wire.

A major well-known problem in automatic and robotic welding, when using a welding wire that comes out of a drum and that is delivered to a welding torch or similar, are the twists of the wire that are created by the coil spooling process. Indeed, twists often appear when a wire is extracted from a drum or similar by the welding machine comprising the welding torch to which the wire is fed.

Actually, when a welding wire is packed in a round container, such as a cylindrical-shaped drum, the wire is always twisted. Afterwards, the twists are released, when the wire leaves the drum during the unwinding of the wire coil, i.e. when the wire is progressively consumed by a welding device.

However, twists in wire are a serious concern as they lead to subsequent welding defects and quality problems in the welding joints thus obtained.

For trying to solve this problem, document EP-A-519424 proposes a container with a retainer device placed on the top of the coil and having an outer periphery matching the diameter of the inner wall of the container and an inner bell-mouthed portion defining a wire extraction opening. The retainer has a smaller size than the internal diameter of the container so that it can freely descend in the container in contact with the coil as the height of said coil decreases as the wire is being unwound from the coil. This solution is not ideal as it is complicated to implement and expensive.

Further, EP-A-636098 teaches to use of a square box with an internal flat cover, arranged on the wire coil. Said cover having a peripheral square border that matches the internal shape of the box so as to retain the welding wire and avoid or limit the twists. This solution is not totally satisfying either as, as the box is square, the welding wire spool is maintained by only small surface areas of the container inner wall, i.e. the lines of contact between the round wire coil and the inner wall of the square box, and such limited contact surface areas are not sufficient to properly maintain the coil. Indeed, it happens, during its transportation, that the container is leant and that the weight of the coil applies directly against one said contact zones leading to possible breakage of the wall.

Furthermore, EP-A-1053189 discloses a polygonal box-like body for accommodating a circular coil of wire and a retainer device arranged inside the body on the coil for preventing accidental entanglement of the wire, and a wire conduit device for the guidance of the wire out from the body during the unwinding. In this case, the retainer device is too complicated and expensive to manufacture.

EP-A-1693139 discloses a drum for a welding wire coil comprising a wire holding device positioned on the coil for holding it. The holding device has a rigid central disc and a flexible cover with a dimension greater than an inner diameter of the drum so that corner portions of the cover slightly rise along an inner wall of the drum.

Further, EP-A-1693140 teaches a drum with a conical, tapered or pyramidal inner wall formed of oblique pieces and comprising a rigid central disc with a central orifice positioned on the coil and across which the wire passes, and further with flexible and deformable peripheral expansions projecting beyond the edge of the disc to maintain the wire loops.

However, in these two cases, the retainer device is also complicated to manufacture, too expensive and/or made of materials that are not environment friendly, i.e., that can not be easily recycled.

EP-A-1357059 describes a welding wire container formed by an internal cylindrical drum and external square box equipped with a particular system for extracting the wire from the container, whereas document MI2001-A-001694 also discloses a container comprising an internal cylindrical drum and external square box. In the latter, the retainer device placed on the top of the coil maintains the wire in place during unwinding. The top-to-bottom motion of the retainer into the internal drum is guided by fingers arranged on the retainer that cooperate with longitudinal slots arranged in the wall of the internal cylindrical drum.

In this case, the problem is that two boxes are required, i.e. the internal drum and the external square box, which renders the packaging much more expensive to produce as it requires a much higher amount of cardboard for manufacturing the two boxes.

As a consequence, there is still a need for a new container with an internal wire-retainer for storing and transporting welding wire coil that is easy and cheap to manufacture, that allows a efficient maintaining of the coil without any risks of wall damages during transportation even when the container is leant, that requires a minimum quantity of cardboard for its manufacture and that overcomes or at least limits the problem of twists and non uniform unwinding of the wire coil.

Further, the container should be configured so as to avoid that the wire can pass between the peripheral border of the retainer ring and the inner surface of the drum, then lays on a portion of the retainer ring and is finally blocked there, while the welding machine is pulling out the wire through the central hole of the retainer ring.

Plus, the retainer should also be able to exercise a constant pressure on the spool without remaining blocked by the walls of the drum, while it goes downwardly in the drum.

Furthermore, the container should also be easy to transport and to handle, stable during utilization and preferably made of recycle material, such as cardboard.

A solution according to the invention is a container for packaging a coil of welding wire formed of a unique hollow body which comprises a peripheral wall and a bottom part at the lower end of the body, a circular coil of welding wire being disposed on the bottom part in said hollow body, said hollow body further comprising an axially mobile retainer arranged on the top of the welding wire coil so as to maintain the wire spirals of the coil, during unwinding of said wire coil, and further comprises several axially-oriented elongated guiding-members positioned inside the hollow body between the peripheral wall and the circular coil of welding wire, said elongated guiding-members being in contact with the internal wall of the body, with the welding wire coil or with both of them, and said elongated guiding-members being spaced one from the other of a given spacing distance D3.

According to the invention, the peripheral contour of the retainer comprises :
- several portions in recess that are facing the elongated guiding-members,
- several projecting expansions being oriented radially towards the inner wall of the body and projecting between said elongated guiding-members, and
- said several projecting expansions comprising each, at least one end portion facing the inner wall of the body, having a given matching length L3 and configured for matching the surface of the inner wall only along said matching length L3, where the spacing distance D3 and the matching length L3 are chosen such that: L3 < 0.8 x D3.

Depending on the embodiment, a container according to the present invention can comprise one or several of the following additional features:
- the spacing distance D3 and the matching length L3 are chosen such that:
   L3 ≤ 0.7 x D3, preferably L3 ≤ 0.6 x D3.
- it comprises at least 3 elongated guiding-members, preferably from 4 to 8 elongated guiding-members, typically 4 elongated-members.
- the guiding-members are cylindrical or semi-cylindrical.
- the guiding-members have a diameter of between 1 cm and 10 cm, preferably of between 2.5 and 5 cm.
- the guiding-members and/or the retainer are made of cardboard, wood, plastic or a combination thereof.
- the guiding-members are disposed at equal distance from one to another.
- the elongated guiding-members have each a height that is less than or equals the internal height of the container body.
- the elongated guiding-members are semi-cylinder, gutter-like, structures fixed to the drum wall by means of traversing holes arranged in said body.
- each semi-cylinder member comprises a semi-cylindrical elongated portion comprising several projecting parts that are integral with the internal wall of said semi-cylindrical elongated portion, each projecting parts comprising a traversing body part and an anchoring head, each traversing body part being arranged through a traversing hole arranged in the drum wall and forming a connection between a semi-cylindrical portion and an anchoring head.
- the retainer arranged on the top of the welding wire coil and between the elongated guiding-members and cooperates with said elongated guiding-members for maintaining the wire spirals.
- the retainer has a general circular shape and comprises several expansions, said expansions projecting radially towards the internal wall and in the space between two juxtaposed elongated guiding-members.
- the peripheral wall of body is made of a multi-layer cardboard material, preferably a three or more layer cardboard.
- the hollow body is made of one rectangular piece of cardboard that is bent so as to obtain a circular hollow body and having two opposite parallel edges attached one to the other.
- the internal diameter of the hollow body is from between 45 cm and 120 cm, preferably from between 50 and 70 cm, and that the height of the hollow body is of between 65 and 120 cm, preferably from between 78 and 110 cm.
- the contained is formed by a unique hollow body having a cylindrical shape.
- the elongated guiding-members are removable, i.e. the guiding members are not fixed to the internal wall and can be extracted from the container body.

A container according to the present invention can be used in a robotic or automatic welding operation, preferably an electric arc welding process, such as a MIG or MAG welding process.

The present invention will be better understood thanks to the following description of several possible embodiments of a container according to the present invention, which is made in references to the accompanying figures among which:
- Figure 1A and 1B represent a container according to the invention,
- Figures 2 to 5 represent several embodiments of the retainer 6 and of the elongated elements of a container according the invention, and
- Figure 6A and 6B represent a particular embodiment of the elongated elements.

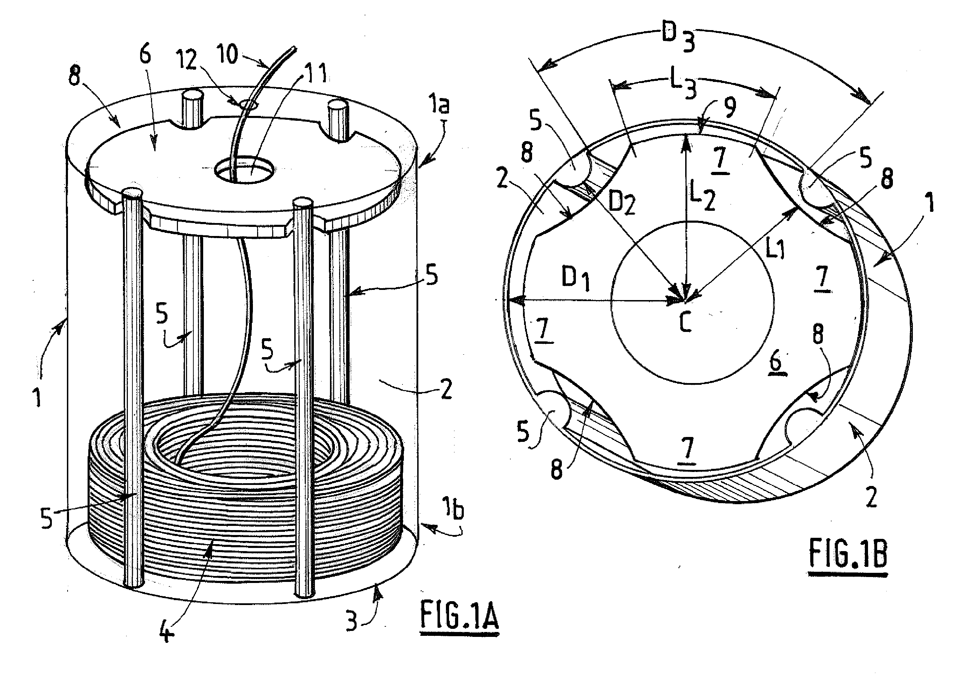

Figure 1A (lateral view) and 1B (view from above) show an embodiment of a container for packaging a coil or spool 4 of welding wire 10, such as a flux cored wire or a metal cored wire, according to the present invention.

It comprises a unique hollow body 1, which comprises a peripheral wall 2 and a bottom part 3 at its lower end 1b, said bottom part 3 is integral with the peripheral wall 2.

The hollow body 1 can further comprise, at its upper end 1a, a cover part (not shown) for closing the container during transportation and storage. When the cover has to remain on the container body 1 during a welding operation, the wire 10 will be extracted from the body 1 through a small outlet 12, i.e. a hole, arranged at the center of the cover.

The body 1, the bottom part 3 and the cover are preferably made of cardboard, preferably reinforced cardboard.

The hollow body 1 has a cylindrical shape. It is preferably made of one rectangular piece of cardboard that is bent so as to obtain the desired circular hollow body 1 and having its two opposite parallel edges attached one to the other, for instance stapled, glued or bonded together so as to obtain a closed cylinder body. The bottom part 3 is fixed to said cylinder body by any suitable connection means, for instance it can be stapled, glued, bonded or similar.

The internal diameter D1 of the hollow body 1 is typically between 45 cm and 120 cm, but preferably between 50 and 70 cm, whereas its height is generally between 65 and 120 cm, preferably between 78 and 110 cm.

A circular coil 4 of welding wire 10 is disposed on the bottom part 3 in said hollow body 1, whereas a mobile retainer 6 is arranged on the top of the welding wire coil 4 so as to maintain the wire spirals of the coil 4 during unwinding. The retainer 6 comprises a central opening 11 through which passes the wire 10, while extracted by the welding machine.

According to the present invention, the container body 1 further comprises several axially-oriented elongated guiding-members 5 positioned inside the hollow body 1 between the peripheral wall 2 and the circular coil 4 of welding wire.

Said elongated guiding-members 5 are in direct contact with the internal wall 2 of the body 1, with the welding wire coil 2 or with both of them, so as to maintain the wire coil 4 in position in the body 1 and to avoid direct pressures of the wire spool against the peripheral wall 2 of the drum body 1 thereby minimizing the risk of damaging said peripheral wall 2.

Further, said elongated guiding-members 5 are also used for guiding the retainer 6 when it goes downwardly into the body 1, during unwinding of the wire coil 4.

The container contains at least 3 elongated guiding-members 5, for instance 4 to 8 elongated guiding-members 5, that are disposed at equal distance one from another.

The elongated guiding-members 5 can be removable or detachable, i.e. not integral with or not fixed to the internal wall 2 of the body 1, so as to be easily removed or positioned by an operator, for instance during the wire filling operation, i.e. when the wire is winded into the body 1.

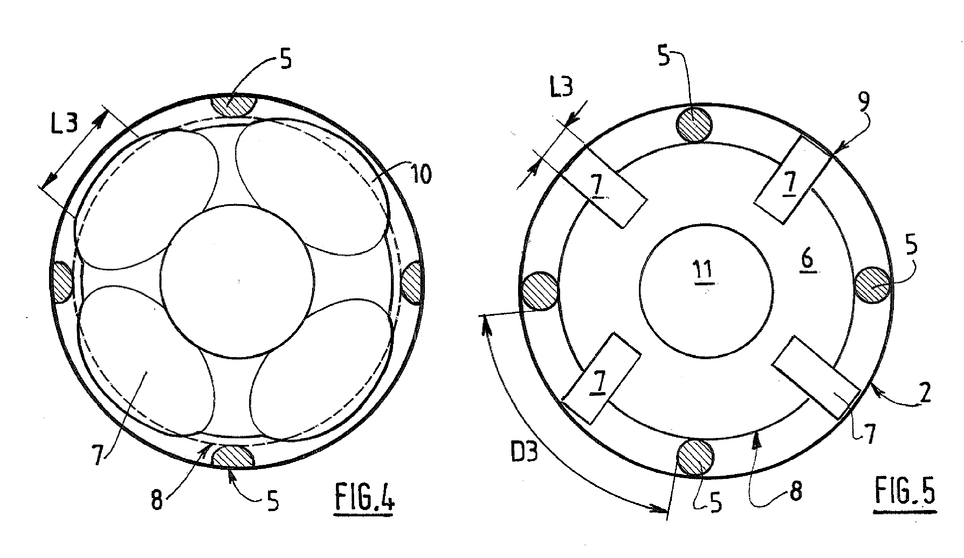

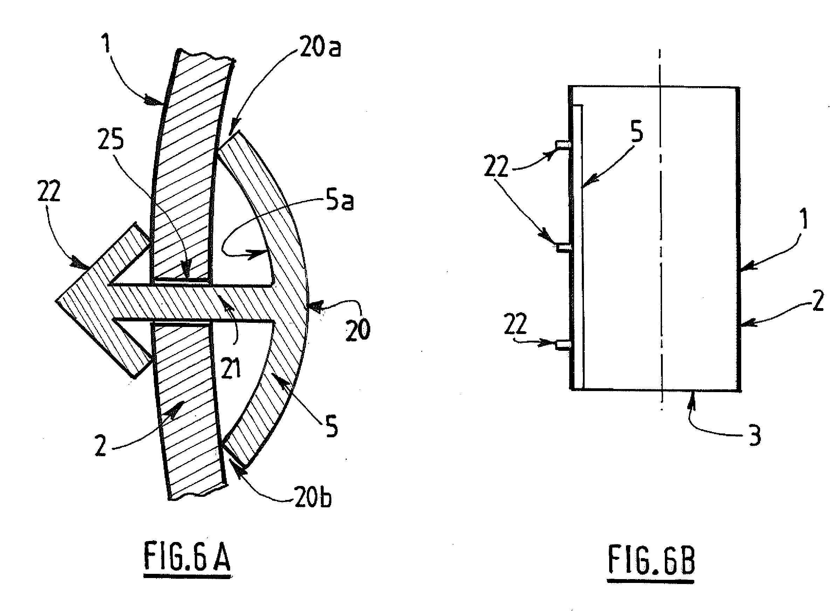

In a first embodiment, the elongated guiding-members 5 are cylinders or tubes as shown on Figures 1A and 2 to 5 or semi-cylinders as shown on Figures 1B and 6.

In a second preferred embodiment, the elongated guiding-members 5 are semi-cylinder structures, as shown in Figures 6A and 6B, that are fixed to the inner wall of the body 1 of the drum thanks to traversing holes 25 arranged in said drum body 1. More precisely, each semi-cylinder member 5 comprises a semi-cylindrical elongated portion 20 having the shape of a gutter, that comes into contact with the wire spool 4 and several projecting parts 21, 22 integral with the internal wall 5a of said semi-cylinder member 5, each projecting parts 21, 22 comprising a traversing body part 21 and an anchoring head 22. The traversing body part 21 constitutes a link, arranged through the drum wall 1, between a semi-cylindrical portion 20 and an anchoring head 22 as shown in Figure 6A.

In other words, the traversing body parts 21 of the semi-cylinder members 5 are positioned in traversing holes 25, when the elongated guiding-members 5 are in their working positions in the drum 1. As shown on Figure 6A, the anchoring heads 22 can have an arrow-type structure so as to constitute efficient anchors of the semi-cylinder member 5 in the drum wall 1. Of course, the anchoring heads 22 can also have other shapes. Advantageously, the anchoring heads 22 are made of a flexible or bentable material that can be deformed so as to easily pass said anchoring heads 22 through the holes 25, when said anchoring heads 22 are forced through said holes 25, and that can, afterwards, recover its original shape and constitute efficient anchors that maintain the gutter-like elements integral that the wall 2 of the drum, as illustrated in Figure 6A.

As shown in Figure 6B, the semi-cylinder members 5 are fixed to the wall of the drum by means of from 2 to 5, for instance 3, projecting parts 21, 22 that pass through holes 25 arranged in the drum wall 2. The gutter-like semi-cylindrical elongated portion 20 being in contact with the inner surface of the body 1 along two contact lines or regions 20a, 20b, preferably parallel contact lines or regions as shown in Fig. 6A.

More generally speaking, the elongated guiding-members 5 can be made of cardboard, wood, metal or any combination thereof.

As already said, an axially-mobile retainer 6 that is arranged on the top of the welding wire coil 4, maintains the wire spirals during the transportation of the container and especially during the unwinding of the coil 4 during a welding process, thanks to its top-to-bottom motion and weight, and thereby preventing accidental entanglement of the wire 10 spirals.

The retainer 6 consists in a perforated generally circular structure, such as a disc made of cardboard, wood or plastic or a combination of these materials.

According to the invention and as better shown on Figure 1B, the peripheral contour or edge of said mobile retainer 6 comprises several expansions or wings 9 that cooperate with the elongated members 5 for maintaining the wire spirals.

The retainer 6 and the elongated members 5 allow a constant and continuous feeding of the wire 10 to a welding torch, at nearly constant drawing force. The spooled wire 10 is prevented from entangling and forming loops.

As shown on Figure 1B, the elongated guiding-members 5 are spaced one from the other of a given spacing distance D3.

Further, the peripheral contour of the retainer 6 comprises, on one hand, several portions in recess 8 that are facing the elongated guiding-members 5 and, on the other hand, several projecting expansions 7 oriented radially towards the inner wall 2 of the body 1 and projecting between the elongated guiding-members 5.

The projecting expansions 7 each comprise, at least one end portion 9 facing the inner wall 2 of the body 1, and each have a given matching length L3 and configured for matching the surface of the inner wall 2 only along said matching length L3, where the spacing distance D3 and the matching length L are chosen such that : L3 < 0.8 x D3.

Distances D3 and L3 are measured inside the drum, i.e. along the inner surface of the drum as shown in Fig. 1B.

Indeed, according to the present invention, it is important to carefully choose the spacing distance D3 and the matching length L3 as, in doing so, it is possible to avoid the wire passing between the peripheral border of the retainer ring 6, more precisely between the projecting expansions 7, and the inner surface 2 of the drum body 1, as the wire is constantly kept under the axially-mobile retainer 6.

As a consequence, the wire spirals can not pass on the retainer ring 6 and be blocked there, when the welding machine is pulling out the wire 10 from the drum 1.

Further, as the length L3 is carefully chosen as a function of the distance D3 between the elongated elements 5, the retainer 6 can not remained blocked by the wall 2 of the body 1 and is able to go progressively downwardly in the body 1, while exercising a constant pressure on the spool 4.

Furthermore, as shown on Figure 1B, the distance L1 between the centre C of the axially-mobile retainer 6 and the edge of the portions in recess 8 that are facing the elongated guiding-members 5, and the distance L2 between the centre C of the axially-mobile retainer 6 and the edge 9 of the projecting expansions 7 facing the inner wall 2 of the body 1 are such as : L1 < L2.

Plus, the internal diameter D1 of the hollow body 1 and the distance D2 between the centre C of the axially-mobile retainer 6 and the elongated elements 5 are such as : D1>D2 and further D1>L2 and L2>D2>L1. Distances D1, D2, L1, L2... are measured as indicated in Fig. 1B.

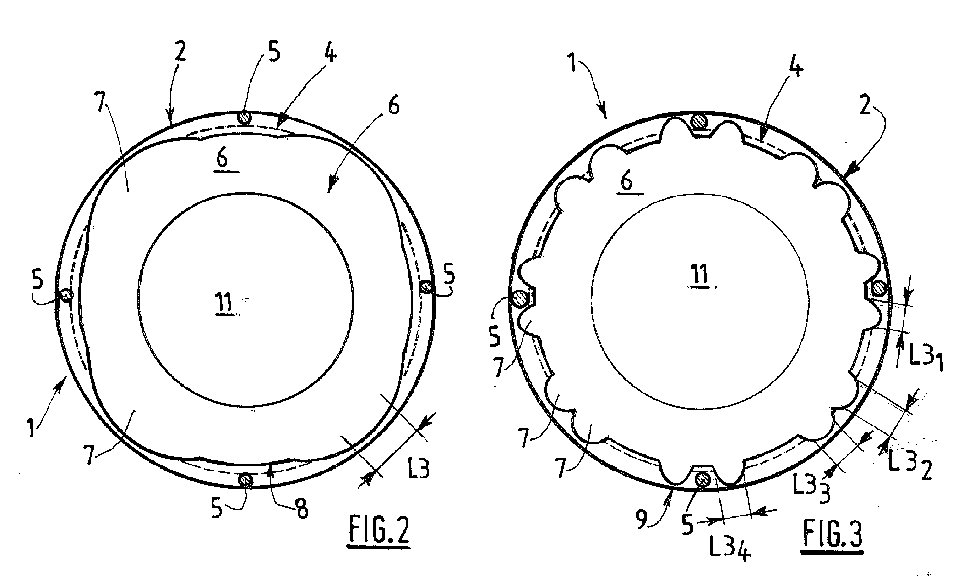

Other possible embodiments of the invention are illustrated on Figures 2 to 5.

In particular, Figure 3 illustrates an embodiment wherein several (n) projecting expansions 7 facing the inner wall 2 of the body 1 are provided between two successive elongated guiding-members 5. In this case, the total L3 distance to consider is the sum of the "n" individual matching lengths L3₁ + L3₂ + L3₃ + .... + L3ₙ of the n projecting expansions 7 as shown on Fig. 3, which can have same or different sizes.

For transportation and storage, the container of the invention can be arranged on a pallet, for instance a pallet made of wood or of polymer material.

The container according to the invention is suitable for use in a robotic or automatic welding operation, such as laser or arc welding process, preferably an electric arc welding process, such as a MIG or MAG welding process. During such a welding process, the wire extracted from the container is fed to a welding torch that is either arranged on a welding machine or on a robotic articulated arm, said torch being used for progressively melting the welding wire and thus obtaining a welding joint.

## Claims

1. Container for packaging a coil of welding wire formed of a unique hollow body (1) which comprises a peripheral wall (2) and a bottom part (3) at the lower end (1b) of the body (1), a circular coil (4) of welding wire (10) being disposed on the bottom part (3) in said hollow body (1), said hollow body (1) further comprising an axially mobile retainer (6) arranged on the top of the welding wire coil (4) so as to maintain the wire spirals of the coil (2), during unwinding of said wire coil (2), and further comprises several axially-oriented elongated guiding-members (5) positioned inside the hollow body (1) between the peripheral wall (2) and the circular coil (4) of welding wire, said elongated guiding-members (5) being in contact with the internal wall (2) of the body (1), with the welding wire coil (2) or with both of them, and said elongated guiding-members (5) being spaced one from the other of a given spacing distance (D3), **characterized in that** the peripheral contour of the retainer (6) comprises :
- several portions in recess (8) that are facing the elongated guiding-members (5),
- several projecting expansions (7) being oriented radially towards the inner wall (2) of the body (1) and projecting between said elongated guiding-members (5), and
- said several projecting expansions (7) comprising each, at least one end portion (9) facing the inner wall (2) of the body (1), having a given matching length L3 and configured for matching the surface of the inner wall (2) only along said matching length L3, where the spacing distance (D3) and the matching length (L3) are chosen such that :
L3< 0.8 xD3.

2. Container according to Claim 1, **characterized in that** the spacing distance (D3) and the matching length (L3) are chosen such that: L3 ≤ 0.7 x D3.

3. Container according to any one of the previous Claims, **characterized in that** the spacing distance (D3) and the matching length (L3) are chosen such that : L3 ≤ 0.6 x D3.

4. Container according to any one of the previous Claims, **characterized in that** the guiding-members (5) are cylindrical or semi-cylindrical.

5. Container according to any one of the previous Claims, **characterized in that** the guiding-members (5) and/or the mobile retainer (6) are made of cardboard, plastic or wood.

6. Container according to any one of the previous Claims, **characterized in that** the guiding-members (5) are disposed at equal distance one from another.

7. Container according to any one of the previous Claims, **characterized in that** it comprises at least 3 elongated guiding-members (5), preferably at least 4 elongated guiding-members (5).

8. Container according to any one of the previous Claims, **characterized in that** the retainer (6) arranged on the top of the welding wire coil (4) and between the elongated guiding-members (5) and cooperates with said elongated guiding-members (5) for maintaining the wire spirals.

9. Container according to any one of the previous Claims, **characterized in that** the retainer (6) has a general circular shape and comprises several expansions (7), said expansions projecting radially towards the internal wall (2) and in the space between two juxtaposed elongated guiding-members (5).

10. Container according to any one of the previous Claims, **characterized in that** the peripheral wall (2) of body (1) is made of cardboard material, preferably a multi-layer cardboard.

11. Container according to any one of the previous Claims, **characterized in that** the internal diameter (D1) of the hollow body (1) is between 45 cm and 120 cm and that the height of the hollow body (1) is between 65 and 120 cm.

12. Container according to any one of the previous Claims, **characterized in that that** the contained is formed by a unique hollow body (1) having a cylindrical shape.

13. Container according to any one of the previous Claims, **characterized in that that** the elongated guiding-members (5) are semi-cylinder structures fixed to the drum wall (2) by means of traversing holes (25) arranged in said body (1).

14. Container according to any one of the previous Claims, **characterized in that that** each semi-cylinder member (5) comprises a semi-cylindrical elongated portion (20) comprising several projecting parts (21, 22) that are integral with the internal wall (5a) of said semi-cylindrical elongated portion (20), each projecting parts (21, 22) comprising a traversing body part (21) and an anchoring head (22), each traversing body part (21) being arranged through a traversing hole (25) arranged in the drum wall (1) and forming a connection between a semi-cylindrical portion (20) and an anchoring head (22).

15. Robotic or automatic welding process, wherein a welding wire is melted by an electric arc or a laser beam, **characterized in that** the wire delivered to the welding torch is extracted from a container according to any one of the previous Claims.
